# EUROPEAN PATENT APPLICATION

(11) **EP 2 958 070 A1**
(43) Date of publication of application: **23.12.2015**
(21) Application number: 15167722.6
(22) Date of filing: 14.05.2015
(51) Int. Cl.: G06Q 30/02, G06Q 10/10, G06Q 20/40

(54) **TIME AND ATTENDANCE APPARATUS METHODS**

(30) Priority: 19.06.2014 GB 201410923
(71) Applicant: Biopanel Systems Limited, Manchester M2 2BQ (GB)
(72) Inventor: Taylor, Jonathan Mark, Manchester, Greater Manchester M2 2BQ (GB)
(74) Representative: Appleyard Lees

(57) **Abstract**

A system and method of operating a time and attendance apparatus receives (202) biometric information; processes (204) the biometric information to determine an identity of a current user of the apparatus and receives (210) user input relating to time and attendance. The system/method further stores (212) and/or transfers data based on the time and attendance user input to create or update a time and attendance record for the user; presents (214) at least one further question to the user; receives (216) further user input in response to the at least one further question, and stores (218) and/or transfers data based on the further user input for creating or updating profile information for the user.

## Description

### Field of the Invention

The present invention relates to time and attendance apparatus and methods of operating such apparatus.

### Background to the Invention

It is known to use apparatus to record time and attendance-related information, such as when employees or contractors start/stop work; a department where the work is performed; tracking meal or break times; travel expenses; work-related subsistence costs, etc. In more recent times, it has become more common for time and attendance apparatus to use biometric technology in order to verify the identity of the person providing the information, thereby improving reliability.

Companies that provide goods or services are constantly seeking new and improved ways of obtaining information regarding customers (or potential customers) so that they can provide highly-customised advertisements, offers or other marketing information to improve the chances of success. It is particularly desirable for such companies to have a level of confidence that such customised information is being shown to the correct/expected person, who is more likely to take an active interest in it.

### Summary of the Invention

The present inventors have appreciated that the regular manner of usage of time and attendance apparatus means that it can be advantageously utilised to gather information that may be used to create a detailed profile of a user. This profile information can then be used to generate highly-customised advertisements, offers or other marketing information, which can be displayed on the apparatus itself. The use of biometric information can guarantee that the identity of the user being shown the information is correctly known and that an accurate profile of that individual can be created and regularly updated.

In a first aspect, the present invention provides time and attendance apparatus comprising:
a biometric device for generating biometric information;
at least one display;
a user input arrangement;
a communications device for transferring data to/from at least one remote apparatus;
a memory, and
a processor configured to:
   process the biometric information generated by the biometric device to determine an identity of a current user of the apparatus;
   receive user input from the user input arrangement relating to time and attendance;
   store in the memory and/or transfer, using the communications device, data based on the time and attendance user input to create or update a time and attendance record for the user;
   present at least one further question to the user on the display;
   receive further user input from the user input arrangement in response to the at least one further question, and
   store in the memory and/or transfer, using the communications device, data based on the further user input for creating or updating profile information for the user.

In some embodiments, the apparatus can include first and second said displays. The first display may be used to display information relating to time and attendance and the second display may be used to display information not relating to time and attendance.

In another aspect, the present invention provides a computing device configured to receive data from time and attendance apparatus, the computing device comprising:
a memory;
a communications device for receiving data from the time and attendance apparatus, and
a processor configured to:
   analyse data received from the time and attendance apparatus to identify a user;
   update a time and attendance data record associated with the user based on the received data, and/or
   update a user profile data record associated with the user based on the received data.

In yet another aspect, the present invention provides a method of operating a time and attendance apparatus, the method comprising:
receiving biometric information;
processing the biometric information to determine an identity of a current user of the apparatus;
receiving user input relating to time and attendance;
storing and/or transferring data based on the time and attendance user input to create or update a time and attendance record for the user;
presenting at least one further question to the user;
receiving further user input in response to the at least one further question, and
storing and/or transferring data based on the further user input for creating or updating profile information for the user.

The at least one further question will not normally relate to time and attendance. The at least one further question may be in a form of a survey, multiple choice question(s) or competition. The at least one further question may be used for marketing purposes.

Alternatively, the at least one question may relate to overtime capacity of the user.

The method may further include (typically after the step of processing the biometric information to determine an identity of a current user of the apparatus): displaying additional information whilst receiving the user input relating to time and attendance and/or whilst presenting at least one further question to the user and/or receiving the further user input in response to the at least one further question. The additional information may include an advertisement, offer or marketing information. The additional information may be based on the profile information of the user.

The profile information for the user may be used for marketing purposes and will not normally include time and attendance-related information for the user.

The information relating to the profile information of the user may include an advertisement or an offer. The advertisement or offer may relate to an item or service in which, according to the profile information, the user has expressed an interest. The advertisement or offer may be based on personal information of the user in the user profile information, e.g. age, gender, marital status, income bracket, etc.

The method may further include performing a determination before proceeding to the step of presenting at least one further question to the user. The determination can include checking if the user input relating to time and attendance indicates a clocking out event for the user and, if so, proceeding to the step of presenting at least one further question to the user. Alternatively, the determination can include an analysis of timing and/or number of questions previously asked to the user.

The step of transferring the data may be performed on a periodic or event-based basis. Data relating to more than one said user may be transferred together.

In yet another aspect the present invention provides a method of receiving and processing data from time and attendance apparatus, the method comprising:
receiving data from time and attendance apparatus;
analysing the received data to identify a user;
updating a time and attendance data record associated with the user based on the received data, and/or
updating a user profile data record associated with the user based on the received data.

In yet another aspect the present invention provides a computer readable medium storing a computer program to operate methods substantially as described herein.

According to the present invention there is provided an apparatus and method as set forth in the appended claims. Other features of the invention will be apparent from the dependent claims, and the description which follows.

### Brief Introduction to the Figures

For a better understanding of the invention, and to show how embodiments of the same may be carried into effect, reference will now be made, by way of example, to the accompanying diagrammatic drawings in which:
Figure 1 schematically illustrates an example system including time and attendance apparatus, a server and a remote computing device;
Figure 2 is a flowchart illustrating example steps performed by the time and attendance apparatus;
Figure 3 is a first example screen display generated by the time and attendance apparatus;
Figure 4 is another example screen display generated by the time and attendance apparatus, and
Figure 5 is a flowchart illustrating example steps performed by the server.

### Description of Example Embodiments

Example embodiments of the present invention will be described in detail with reference to the accompanying drawings.

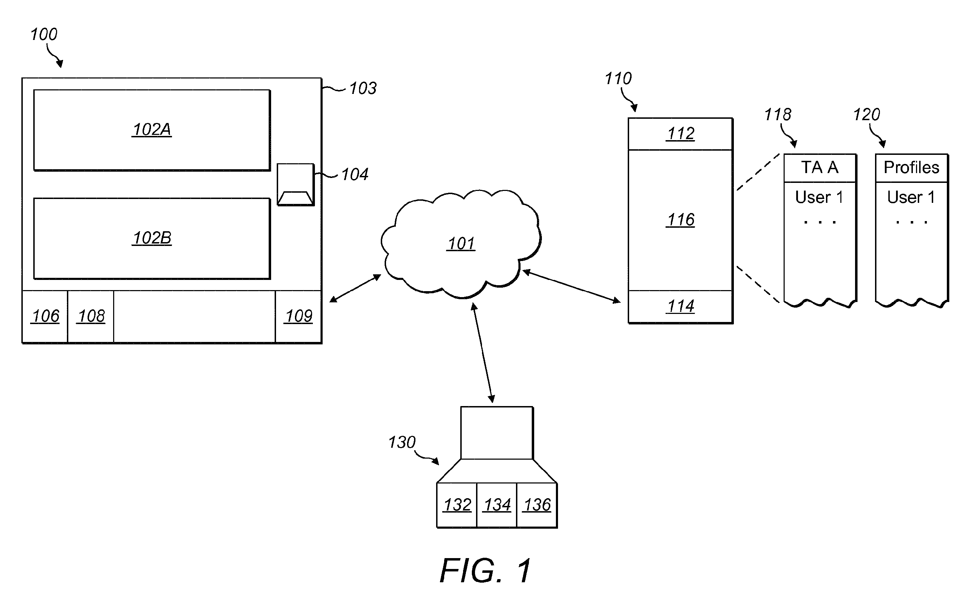

Figure 1 shows an example system including time and attendance apparatus 100, a server 110 and a remote computing device 130, all of which can communicate over a network 101. In a typical set-up the system will be operated by a company/entity that controls the server and who also provides one or more time and attendance apparatus to a customer/premises (e.g. a factory or other workplace) who wants to operate a time and attendance recording system. In use, the system will typically comprise several time and attendance apparatus (one or more for each client company/site) and each apparatus can be given a unique identifier within the system.

The remote computing device may belong to/be associated with another entity, e.g. a company that wants to collect/use marketing data of users of the time and attendance apparatus.

The time and attendance apparatus 100 comprises a housing 103 that at least partially encloses other components of the apparatus. In the example apparatus the housing is formed of rectangular plastic and is typically mounted on a wall adjacent a doorway through which users regularly pass when entering or leaving a workplace. It will be appreciated that the dimensions, design, construction method and material(s) of the apparatus/housing can vary, as well as its mounting/location.

At least one display is mounted within the housing 103. The example apparatus 100 includes a first display screen 102A located above a second display screen 102B. The skilled person will appreciate that the displays may be based on any suitable technology (e.g. LED, LCD, E-ink, etc) and in other embodiments the number, dimensions and arrangement of the display(s) in the apparatus can vary.

In the illustrated example, at least one of the displays (e.g. lower display 102B) is a touch-screen that allows the apparatus 100 to receive user input. In alternative embodiments, at least one different or additional user interface may be provided, e.g. a keypad, keyboard, speech recognition, joystick or other controller, etc.

The apparatus 100 further includes at least one biometric device 104. Any suitable type of biometric device(s) that can be based on assessing physiological (e.g. fingerprint, face recognition, iris recognition, etc) and/or behavioural characteristics can be used by the apparatus.

The apparatus 100 further includes a processor (shown schematically at 106) that is in communication with/controls the other components. The apparatus further includes a memory (shown schematically at 108) and a communications device (shown schematically at 109) that allows it to exchange data with at least one other remote device. The memory can hold data and instructions that allows the apparatus to execute methods as described herein.

In one example embodiment the apparatus 100 can comprise an Acer W7™ series tablet computer; a Suprema™ SM500 USB fingerprint module; a 4-port USB hub; a USB Network interface adapter (RJ45) housed in a plastic enclosure. The software executing on the apparatus can be written.NET 4.5 and can be run on a Microsoft™ based operating system, e.g. Windows 8™. The software can be designed in Microsoft Visual Studio™ and Microsoft Blend™. Of course, the skilled person will understand that these hardware and software components are exemplary only.

In the illustrated example the apparatus 100 communicates over a network 101, which can include the internet, although in other embodiments, the apparatus may transfer data with at least one remote device using any wired or wireless communications technology, or even by means of removable storage media.

Figure 1 also schematically illustrates a server computing device 110 that can transfer data over the network 101. The server includes a processor 112, communications device 114 and memory 116. The memory can hold data and instructions that allows the server to execute methods as described herein. For example, the server run software within a Microsoft™ Internet Information Server (IIS) and may send/receive data over HTTP/HTTPS with authentication.

In the example system of Figure 1, the memory 116 of the server is shown as storing data comprising a time and attendance database 118 for a set of users and a profile information database 120 for (the same or different) set of users. It will be understood that any suitable data structure/format can be used for these databases. In one embodiment, the server and the apparatus 100 may utilise Microsoft SQL™ server for storing/retrieving data and carrying out instructions. In other embodiments, at least some of the data shown as being stored by the server may be (at least temporarily) stored and/or processed by at least one other device, e.g. a remote computing device 130.

Figure 1 further schematically illustrates a remote computing device 130 that can transfer data over the network 101. The remote computing device includes a processor 132, communications device 134 and memory 136. The memory can hold data and instructions that allows the remote computing device to execute methods as described herein.

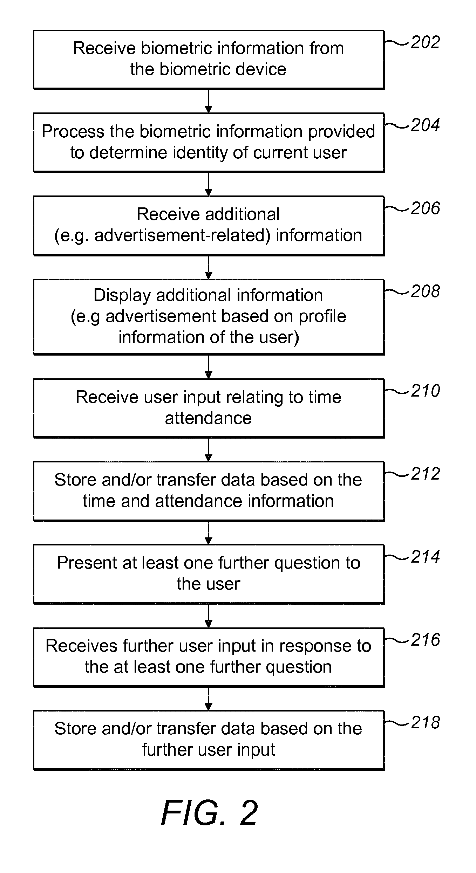

Figure 2 is a flowchart showing example steps performed by the time and attendance apparatus 100. It will be appreciated that the steps shown in the flowcharts are exemplary only and in alternative embodiments at least some of the steps may be re-ordered or omitted, and/or additional steps could be performed. In other embodiments, some of the steps shown as being performed by the server 110, for example, may be performed by at least one other device, e.g. the apparatus 100 and/or the remote computing device 130. The skilled person will also understand that the methods described herein can be implanted using any suitable programming language, data structures and hardware.

At step 202 of Figure 2, the time and attendance apparatus 100 receives biometric information from the biometric device 104. For example, the lower display 102B of the apparatus may display a message inviting a user to insert his/her finger into the biometric device for scanning.

An individual will normally initially need to be registered as a user of the system. This can be done at least partially using the apparatus 100. For instance, the apparatus may be configured to execute a new user registration process wherein a user is invited to provide some personal information and register their biometric information, e.g. one or more fingerprint. Examples of personal information that may be provided include surname, forename(s), date of birth, gender, email address, home address, UK National Insurance number. It will be understood that the user need not actually enter this information onto the apparatus 100 during the registration process. For instance, the user may provide this information to his/her employer, or an operator of the system, prior to using the apparatus and may be given a payroll/ID at that time. Then, when the user performs the next step of the registration process at the apparatus, the apparatus only require the user to input this payroll/ID, verify it and then provide the biometric information. The registration details, including data based on the biometric information, may be stored in the memory 108 of the apparatus, or, more typically for security, can be transferred for storage in the memory 116 of the server 110. The apparatus may allow the user to perform other steps, such as steps 210 onwards described below, immediately after the registration process.

At step 204, the apparatus 100 processes the received biometric information provided by the biometric device 104 to determine the identity of the current user of the apparatus. It will be understood that the exact steps involved in this process can vary. For instance, the user may be invited to scan more than one fingerprint. Also, the user may be invited to provide or confirm login/identity information in addition to the biometric information.

The apparatus 100 may compare the biometric/other information provided with the contents of its own memory 108 and/or may exchange data with a remote device, e.g. the server 110, in order to determine the identity of the user that corresponds to the biometric/other information provided.

After the identity of the current user of the apparatus 100 has been determined at step 204, the apparatus 100 may be configured to display information based on the profile information of that user, e.g. an advertisement. Additionally, the apparatus may receive data relating to such information/advertisement from a remote device. For ease of illustration, the receipt of such advertisement-related information is indicated at step 206 of the flowchart and the display of information based on the profile information of the user at step 208. However, it will be understood that these types of information may be received and/or displayed continuously or intermittently at any point between when the identity of the user has been determined and a point at which the apparatus determines that the user is no longer present or interacting with it.

The information relating to the profile information of the user displayed in this manner will typically comprise an advertisement or offer. The advertisement or offer can relate to an item/subject in which the user has expressed an interest according to part of his/her profile information. Alternatively or additionally, the advertisement or offer may relate to personal information of the user as stored in his/her profile information, e.g. age, gender, marital status, income bracket, etc. As will be described below, the profile information of the user can be built up using information provided by the user during interaction with the apparatus 100. Therefore, the type of information displayed to the user can be highly customised/individualised/targeted. Advertisers also have reassurance (via the biometric identity verification) that the person viewing the information is as expected.

Further, additional information, e.g. a HD video, may be displayed on at least one of the screens 102A, 102B (continuously or intermittently) whilst no user is deemed to be directly interacting with the apparatus 100, e.g. general interest videos/advertisements that can viewed by casual onlookers or passers-by. This additional information may be transferred from a remote device, e.g. the server 110, on a periodic or selective (e.g. by a user of the server) basis. The content of such additional information may be chosen randomly, by a user of the server (e.g. in accordance with client/customer requests) or based on information derived from analysing the profiles of a set of users of the apparatus 100 (e.g. users that work night shifts, interests shared by a certain percentage of all the users at the site of the apparatus, etc).

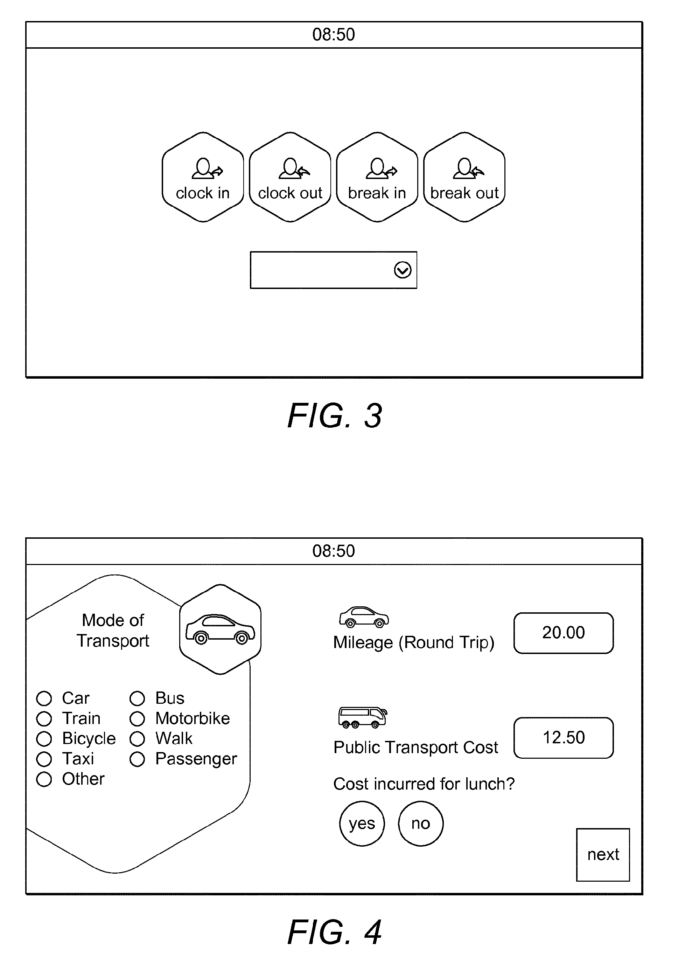

At step 210, the apparatus 100 receives input from the user relating to time and attendance. For example, the lower screen 102B may show a display as shown in Figure 3, inviting the user to select whether he/she wants to record a clock in, clock out, break in or break out time and attendance event by touching a respective onscreen icon 302A - 302D. The user may also be invited to provide other information relating to the time and attendance event, e.g. an indication of his/her department 304. Figure 4 shows another example of a screen display for inputting information relating to work-related public/private transport costs incurred by the user that he/she wants to claim back from their employer.

At step 212, the apparatus 100 may at least temporarily store data based on the time and attendance information input by the user in its memory 108. Additionally or alternatively, the apparatus may transfer the data over the network 101 to the server 110. Such transfer of data may be performed on a real-time basis; an event-based basis (e.g. after a user has finished interacting with the apparatus), or periodically, e.g. in batches (which can result in a combination of step 212 and step 218 below). For instance, the data in the server may be periodically synchronised/updated with data stored in the time and attendance apparatus, e.g. after a certain period of time has elapsed (e.g. end of working day), or after a certain number of users have recorded time and attendance events, etc. The data can be used (typically by the server) to create or update a time and attendance record for the user, as will be described below.

At step 214, the apparatus 100 may present at least one further question to the user. In some embodiments, the at least one further question may be intended for marketing purposes. Alternatively or additionally, the at least one further question may ask the user regarding his/her availability for overtime or the like.

In some embodiments, a different display (or portion of a single display) may be used to present/request information that is not related to time and attendance to that which is used to present/request information that does relate to time and attendance. For example, the upper screen 102A may be used to display the advertisements (discussed above with regards to step 208) and/or present the additional question(s) of step 214, with the lower screen 102B being used to present information and receive user input relating to time and attendance, e.g. step 210.

In some embodiments, the presentation of the at least one further question of step 214 is optional. Users may get tired of having to answer such questions each and every time they use the apparatus 100 and so the apparatus may be configured to perform a determination as to whether or not steps 214 - 218 are to be executed. For example, the apparatus may be configured to check if the time and attendance event recorded by the user at step 210 was a "clock out" event and only execute steps 214 - 218 if this is the case. As another example, the apparatus may perform the determination based on one or more factor, such as how many previous questions the user has answered (e.g. during a recent time period); the current time/date, and so on.

Examples of marketing-type questions that may be presented by the apparatus at step 214 include "When is your car insurance due?" or "Is your mobile phone contract due to expire soon?". However, it will be understood that a wide range of styles of questions and answers can be used. For example, the apparatus may display a survey and the answers may be in yes/no; multiple choice, numerical and/or full text format. The further question(s) can be in the form of a survey, competition or have some other type of incentive. At step 216, the apparatus receives further user input in response to the at least one further question presented at step 214.

At step 218, the apparatus 100 may at least temporarily store in its memory 108 data based on answers provided by the user at step 216. Additionally or alternatively, the apparatus may transfer the data over the network 101 to the server 110. Again, such transfer of data may be performed on real-time, an event-based basis, e.g. after it is input by the user/processed by the apparatus, or the transfer may be performed, e.g. in batches, periodically. The data can be used (typically by the server or the remote computing device 130) to create or update a user profile record for the user, as will be described below. In addition to time and attendance and profile-related information, the apparatus may also transfer other information to the server, such as user registration-related data, OS instruction results, etc.

In some cases, the server 110 may also transfer data back to the apparatus 100 after receiving data, e.g. data comprising an advertisement that has been generated/modified in response to an updates to a user profile. The server can also update the apparatus with other information, such as configuration changes; surveys/questions; communication updates; time; software Updates; OS Instructions and/or user registrations, etc.

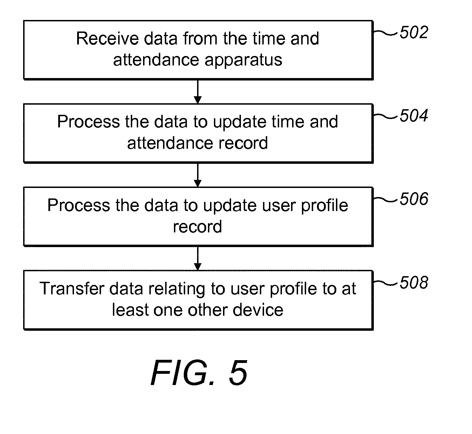

Figure 5 is a flowchart showing examples of steps that can be performed by the server 110.

At step 502, the server 110 receives data transferred from the apparatus 100 via the network 101. It will be understood that the data transfer can take place in various ways. For instance, as discussed above, the apparatus may transfer time and attendance data at step 212 and transfer user profile data at step 218, or combined data (for one or more users) may be transferred on a periodic basis.

At step 504, the server 110 processes information from the received data that relates to time and attendance. This information can be used to update the time and attendance record of that user in the database 118. For example, the record of a user may be updated to reflect that he/she clocked in (via the apparatus 100) at a certain time/date. An employer or other such entity may be able to access the updated record, either via the server 110, or a copy of at least some of the database content may be transferred to a remote device for access.

At step 506, the server 110 processes information from the received data that relates to a user profile. This information can be used to update a record of a user in the user profile database 120. For example, the profile information of a user may be updated to indicate the date on which the user's car insurance is due for renewal.

At step 508, the server 110 may transfer data relating to the user profile information to at least one other device via the network 101. For instance, the data may transfer the data to the remote computing device 130. The data transferred may include some personal/contact information relating the user, e.g. telephone number and/or email address, along with information regarding a particular type of product, service or subject in which, according to his/her answers (provided at step 216), the user may be interested. For example, the remote computing device may be associated with/owned by a company that sells mobile/cell telephones and the user has indicated in reply to questions that his/her current contract is soon coming to an end and so may be interested in purchasing a new handset/contract. It will be understood that this is one example only and many different types of marketing information may collected and used/distributed by the system. In other embodiments, the server 110 may further process the user profile information prior to transferring it to a remote device, or may simply transfer part/all of a user profile for another company to use in various ways. This process may be at least partially automated. The operator of the system/server may charge in various ways for providing this information and/or providing the option to display information on the apparatus 100.

In some embodiments, a user of the remote computing device 130 may be able to control/request, typically via communication with the server 110, display of additional information on the apparatus 100. For example, if the user of the remote device has received information indicating that a particular user may be interested in acquiring a new telephone then he may be able arrange for a special offer relating to a telephone he sells to be displayed on a screen of the apparatus when that user next uses the apparatus. This process may be at least partially automated.

The system may be configured to store information regarding how a user has consented to his/her information being used in order to comply with any legal regulations.

The present invention will be understood readily by reference to the above description of example embodiments and the accompanying drawings. The present invention may, however, be embodied in many different forms and should not be construed as being limited to the example embodiments described above. Rather, these embodiments are provided so that this disclosure will be thorough and complete and will fully convey the concept of the invention to those skilled in the art. The present invention is defined by the statements of aspects of the invention in the summary of invention section above, and with reference to any appended claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification, including any accompanying claims, abstract and drawings, and/or all of the steps of any method or process so disclosed, may be combined in any combination, except combinations where at least some of such features and/or steps are mutually exclusive.

Each feature disclosed in this specification, including any accompanying claims, abstract and drawings, may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification, including any accompanying claims, abstract and drawings, or to any novel one, or any novel combination, of the steps of any method or process so disclosed.

## Claims

1. Time and attendance apparatus (100) comprising:
a biometric device (104) for generating biometric information;
at least one display (102A, 102B);
a user input arrangement (102B);
a communications device (109) for transferring data to/from at least one remote apparatus;
a memory (108), and
a processor (106) configured to:
process the biometric information generated by the biometric device to determine an identity of a current user of the apparatus;
receive user input from the user input arrangement relating to time and attendance;
store in the memory and/or transfer, using the communications device, data based on the time and attendance user input to create or update a time and attendance record for the user;
present at least one further question to the user on the display;
receive further user input from the user input arrangement in response to the at least one further question, and
store in the memory and/or transfer, using the communications device, data based on the further user input for creating or updating profile information for the user.

2. Apparatus according to claim 1, including first (102A) and second (102B) said displays, wherein the first display is used to display information relating to time and attendance and the second display is used to display information not relating to time and attendance.

3. A computing device (110) configured to receive data from time and attendance
apparatus (100), the computing device comprising:
a memory (116);
a communications device (114) for receiving data from the time and attendance apparatus, and
a processor (112) configured to:
analyse data received from the time and attendance apparatus to identify a user;
update a time and attendance data record associated with the user based on the received data, and/or
update a user profile data record associated with the user based on the received data.

4. A method of operating a time and attendance apparatus, the method comprising:
receiving (202) biometric information;
processing (204) the biometric information to determine an identity of a current user of the apparatus;
receiving (210) user input relating to time and attendance;
storing (212) and/or transferring data based on the time and attendance user input to create or update a time and attendance record for the user;
presenting (214) at least one further question to the user;
receiving (216) further user input in response to the at least one further question, and
storing (218) and/or transferring data based on the further user input for creating or updating profile information for the user.

5. A method according to claim 4, wherein the at least one further question does not relate to time and attendance.

6. A method according to claim 5, wherein the at least one further question is in a form of a survey, multiple choice question(s) or competition.

7. A method according to claim 4, wherein the at least one question relates to overtime capacity of the user.

8. A method according to any of claims 4 to 7, further including displaying (206) additional information whilst receiving (210) the user input relating to time and attendance, and/or whilst presenting (214) the at least one further question to the user, and/or receiving (216) the further user input in response to the at least one further question.

9. A method according to any of claims 4 to 8, further including performing a determination before proceeding to the step of presenting (214) the at least one further question to the user.

10. A method according to claim 9, wherein the determination includes checking if the user input relating to time and attendance indicated a clocking out event for the user and, if so, proceeding to the step of presenting at least one further question to the user.

11. A method according to any one of claims 4 to 10, wherein the step of transferring (218) the data is performed on a periodic or event-based basis.

12. A method according to claim 11, wherein said data relating to more than one said user is transferred in a batch.

13. A method of receiving and processing data from time and attendance apparatus (100), the method comprising:
receiving (502) data from time and attendance apparatus;
analysing (504) the received data to identify a user;
updating (506) a time and attendance data record associated with the user based on the received data, and/or
updating (508) a user profile data record associated with the user based on the received data.

14. A computer readable medium storing a computer program to operate a method according to any of claims 4 to 12.

15. A computer readable medium storing a computer program to operate a method according to claim 13.
